# EUROPÄISCHE PATENTSCHRIFT

(11) **EP 3 475 014 B1**
(45) Veröffentlichungstag und Bekanntmachung des Hinweises auf die Patenterteilung: **18.05.2022**
(21) Anmeldenummer: 17732055.3
(22) Anmeldetag: 14.06.2017
(51) Int. Cl.: B22F 10/28, B22F 5/10, B22F 3/00, B33Y 30/00, F16J 15/08, F16J 1/00, B22F 12/00

(54) **BAUZYLINDER-ANORDNUNG FÜR EINE MASCHINE ZUR SCHICHTWEISEN FERTIGUNG DREIDIMENSIONALER OBJEKTE, MIT GESTRICKTE FASERMETALLDICHTUNG**
BUILD CYLINDER FOR AN ADDITIVE MANUFACTURING APPARATUS WITH KNITTED METAL SEAL
CYLINDRE DE CONSTRUCTION D'UN APPAREIL POUR LA PRODUCTION D'OBJET TRIDIMENSIONNEL PAR MÉTHODE ADDITIVE COMPORTANT UN JOINT MÉTALLIQUE TISSÉ

(30) Priorität: 23.06.2016 DE 102016211214
(43) Veröffentlichungstag der Anmeldung: 01.05.2019
(73) Patentinhaber: Trumpf Laser- und Systemtechnik GmbH, 71254 Ditzingen (DE)
(72) Erfinder: PIEGER, Markus, 73240 Wendlingen (DE)
(74) Vertreter: Kohler Schmid Möbus Patentanwälte
(86) Internationale Anmeldenummer: PCT/EP2017/064468
(87) Internationale Veröffentlichungsnummer: WO 2017/220385

(56) Entgegenhaltungen:
- EP-A1- 2 789 890
- EP-A2- 2 926 927
- WO-A1-2016/150721
- CN-A- 102 107 254
- DE-A1-102013 012 032
- DE-A1-102013 018 031
- JP-A- 2015 151 566
- US-A1- 2003 157 386
- US-A1- 2007 023 977
- US-A1- 2015 202 687

## Beschreibung

Die Erfindung betrifft eine Bauzylinder-Anordnung für eine Maschine zur schichtweisen Fertigung dreidimensionaler Objekte durch Sintern oder Schmelzen mit einem Hochenergiestrahl, insbesondere Laserstrahl, von pulverförmigem Material,
mit einem im Wesentlichen zylindermantelförmigen Grundkörper und einem an einer Innenseite des Grundkörpers entlang einer Zylinderachse des Grundkörpers verfahrbaren Kolben,
wobei der Kolben an seiner Oberseite ein Substrat für das Aufwachsen eines dreidimensionalen Objekts aufweist,
und wobei am Kolben eine an der Innenseite des Grundkörpers anliegende Dichtung zur Abdichtung des pulverförmigen Materials ausgebildet ist.

Eine solche Bauzylinder-Anordnung ist aus der JP 2015 151566 A1 bekannt geworden.

Durch das schichtweise Fertigen dreidimensionaler Objekte mittels Lasersintern oder Laserschmelzen (auch genannt "selective laser sintering" oder "selective laser melting") können Objektgeometrien gefertigt werden, die mit herkömmlichen Techniken (die beispielweise auf einem Gießprozess oder einem Fräsen eines Vollkörpers beruhen) nicht zugänglich sind.

Dabei wird auf einem Substrat (auch Bauplattform genannt) in einem Bauzylinder eine dünne Schicht eines pulverförmigen Materials aufgetragen und dann an ausgewählten Orten mit einem Bearbeitungslaserstrahl aufgeheizt, bis das pulverförmige Material aufschmilzt oder sintert. Anschließend wird das Substrat in dem Bauzylinder um eine Schichtdicke des Pulvers abgesenkt, eine weitere Schicht des pulverförmigen Materials aufgetragen und wiederum an ausgewählten Orten durch den Bearbeitungslaserstrahl erhitzt, und so fort. Das Auftragen und das Erhitzen des pulverförmigen Materials finden meist unter Ausschluss von Luft statt, um Oxidationsprozesse zu vermeiden, insbesondere wenn ein metallisches pulverförmiges Material verarbeitet wird. Eine Maschine für die schichtweise Fertigung dreidimensionaler Objekte ist beispielsweise aus der EP 2 732 890 A2 bekannt geworden.

Ein analoges Vorgehen ist auch mit einem Elektronenstrahl möglich, der das pulverförmige Material lokal sintert oder aufschmilzt.

Eine Schwierigkeit bei dem beschriebenen Vorgehen ist das Verfahren des Substrats im Bauzylinder bei anliegendem pulverförmigem Material. Zum einen soll nicht unnötig pulverförmiges Material verlorengehen, und zum anderen kann das pulverförmige Material Undichtigkeiten am Bauzylinder hervorrufen, die einen unerwünschten Lufteintrag in das zu fertigende Objekt zur Folge haben. Um mechanische Spannungen im fertigen Bauteil zu vermeiden, ist es zudem vorteilhaft, das pulverförmige Material vor der Einwirkung des Bearbeitungslaserstrahls vorzuwärmen.

Die EP 1 347 853 B1 offenbart eine Apparatur zur schichtweisen Fertigung von dreidimensionalen Objekten mittels Laserschmelzen, wobei in einer luftdichten Kammer eine Arbeitskammer angeordnet ist. Die Arbeitskammer ist mit einem Bauzylinder versehen. Ein Kolben im Bauzylinder wird gegen den Bauzylinder mit metallischen Kolbenringen aus Gusseisen abgedichtet. Oberhalb und unterhalb einer Zielfläche sind Heizkomponenten vorgesehen.

Metallische Kolbenringe aus Gusseisen sind grundsätzlich geeignet, eine gute Abdichtung des pulverförmigen Materials zu bewirken, wobei sie auch bei hohen Temperaturen einsetzbar sind. Allerdings müssen die metallischen Kolbenringe vergleichsweise exakt gefertigt werden, um Spalten beispielsweise aufgrund einer Unrundheit zu vermeiden. Da die metallischen Kolbenringe mit Übermaß ausgebildet sind, liegen diese mit großer Kraft an der Innenseite des Grundkörpers des Bauzylinders an, so dass die Betätigung des Kolbens sehr schwergängig ist.

Aus der nachveröffentlichten deutschen Patentanmeldung 10 2015 211 538.0 ist es bekannt geworden, an einem Kolben eine Pulverdichtung aus keramischen Fasern, etwa Al₂O₃-Fasern, vorzusehen, mit denen das Pulvermaterial zurückgehalten werden kann. Keramische Fasern sind jedoch unelastisch, was die Dichtwirkung beeinträchtigen kann. Zudem können abgebrochene Faserteilchen das pulverförmige Material verunreinigen und so die Qualität des gefertigten dreidimensionalen Objekts beeinträchtigen. Bei Verwendung von Graphitfaserfilzen als Pulverdichtung, wie in der 3D-Druckmaschine TrumaForm LF der TRUMPF GmbH & Co. KG, Ditzingen, DE, können ebenfalls abgebrochene Faserteilchen oder auch herausgelöste Fasern das pulverförmige Material verunreinigen. Zudem sind Graphitfasern bei höheren Temperaturen (>350°) an Luftsauerstoff nicht mehr oxidationsbeständig, was Zylinderwechselprozesse behindern kann.

Aus der EP 0 248 132 B1 ist eine Metallfaserstruktur bekannt geworden, mit der ein Gasfluss in einem Drehkompressor oder einer Turbine blockiert werden kann. Die Metallfaserstruktur ist von ringförmiger Gestalt. Eine andere Fasermetalldichtung für eine Gasturbine ist aus der US 4,381,173 bekannt.

Die nachveröffentlichte WO 2016/150 721 A1 beschreibt eine Anlage für ein additives Herstellungsverfahren, bei der seitlich an einer verfahrbaren Bodenstruktur, auf der ein Bauteil schichtweise aufwächst, eine Bürstendichtung ausgebildet ist. Dabei sind metallische Borsten radial nach außen stehend in der Bodenstruktur verankert.

Die JP 2015 151566 A1 beschreibt eine Vorrichtung zur dreidimensionalen schichtweisen Fertigung, wobei eine Plattform in einem zylindrischen Körper verfährt. Auf der Plattform wird ein Objekt schichtweise gefertigt. Die Plattform ist mit einer Glasfaserdichtung gegenüber dem zylindrischen Körper abgedichtet. Außen am zylinderischen Körper ist eine Heizung angeordnet.

Die CN 102 107 254 A beschreibt eine Metallfilzdichtung und deren Herstellung, insbesondere zur Verwendung in einer Gasturbine.

### Aufgabe der Erfindung

Der Erfindung liegt die Aufgabe zugrunde, eine Bauzylinder-Anordnung vorzuschlagen, bei der eine einfache und beständige Abdichtung des Kolbens gegenüber dem pulverförmigen Material möglich ist, insbesondere wobei die Qualität des gefertigten dreidimensionalen Objekts nicht beeinträchtigt wird, und wobei der Kolben besser genutzt wird.

### Kurze Beschreibung der Erfindung

Diese Aufgabe wird gelöst durch eine Bauzylinder-Anordnung der eingangs genannten Art, die dadurch gekennzeichnet ist,
dass die Dichtung zur Abdichtung des pulverförmigen Materials als eine umlaufende Fasermetalldichtung aus miteinander verpressten Metallfasern ausgebildet ist,
dass die Fasermetalldichtung (60) durch Verpressen der Metallfasern (61) unter teilweise plastischer Verformung der Metallfasern (61) zu einem einheitlichen, als Ganzes handhabbaren Dichtkörper gefertigt ist,
dass die verpressten Metallfasern unter elastischer Druckspannung zwischen dem Kolben und der Innenseite des Grundkörpers angeordnet sind,
dass das Substrat und die Dichtung zur Abdichtung des pulverförmigen Materials an einem oberen Teil des Kolbens ausgebildet sind, der lösbar an einem übrigen Teil des Kolbens angeordnet ist,
und dass in dem übrigen Teil des Kolbens eine Heizeinrichtung ausgebildet ist, mit der das Substrat auf eine Einsatztemperatur ET aufgeheizt werden kann, wobei 500°C ≤ ET ≤ 1000°C..

Die Erfindung schlägt vor, eine Pulverdichtung am Kolben aus einer Fasermetalldichtung einzurichten. Diese enthält eine Vielzahl von für sich elastischen Metallfasern (Metalldrähten), die miteinander verpresst wurden und nach dem Verpressen einen einheitlichen, als Ganzes handhabbaren Dichtkörper ausbilden. Die Verformung beim Verpressen erfolgt aufgrund des metallischen Materials der Fasern teilweise plastisch, wodurch bereits ein guter Faserzusammenhalt erreicht werden kann, teilweise aber auch elastisch.

Die elastische Verformung des Presslings geht nach dem Verpressen wieder zurück, bzw. der Pressling weitet sich wieder etwas auf ("Auffederung"), wobei im Wesentlichen Biegungen der Metallfasern zurückgehen. Man beachte, dass die Auffederung nicht nur in der Richtung des Verpressens (etwa der axialen Richtung), sondern auch in andere Richtungen erfolgt (etwa in radialer Richtung und azimutaler Richtung). Um eine besonders große Auffederung zu erreichen, erfolgt das Verpressen beim Anfertigen der Fasermetalldichtung typischerweise kalt (Kaltverformung ohne zusätzliche Beheizung, bei Raumtemperatur). Die Fasermetalldichtung ist also (innerhalb gewisser Grenzen) formflexibel.

Die Fasermetalldichtung kann dann unter elastischer Spannung, insbesondere radialer elastischer Druckspannung, zwischen dem Kolben und der Innenseite des Grundkörpers des Bauzylinders eingespannt werden. Dadurch wird eine gute beidseitige Anlage erreicht, auch wenn Unebenheiten oder Unrundheiten an der Innenseite des Grundkörpers oder an der Auflage für die Fasermetalldichtung an der Außenseite des Kolbens bestehen sollten; auch einzelne anliegende Pulverpartikel können ausgeglichen werden und führen insbesondere nicht zu einer azimutalen Spaltbildung. Die benötigte Kraft für eine elastische Verformung ist relativ gering, da diese im Wesentlichen auf der Biegeverformung von Metallfasern beruht; entsprechend ist der Kolben vergleichsweise leicht betätigbar. Über die elastische Verformung der Fasermetalldichtung können insbesondere unterschiedliche Wärmeausdehnungen von Kolben und Grundkörper (bedingt durch die verwendeten Materialen oder auch aufgrund von Temperaturdifferenzen bei schnellem Verschieben des Kolbens), oder auch lokal unterschiedliche Wärmeausdehnungen im Kolben oder im Grundkörper aufgrund von Temperaturgefällen gut ausgeglichen werden. Ebenso können leichte Verkippungen des Substrats gegenüber dem Grundkörper ausgeglichen werden, etwa bei der Justage des Substrats.

Über die Menge des verpressten metallischen Fasermaterials im Dichtkörpervolumen kann die Dichte und damit die Durchlässigkeit gegenüber dem - meist metallischen - pulverförmigen Material eingestellt werden. Man beachte, dass für eine Dichtigkeit gegenüber Pulver bereits relativ geringe Dichten genügen. Die Dichte sollte auch nicht zu hoch gewählt werden, um den elastischen Verformungsbereich nicht zu stark zu begrenzen.

Die Metallfasern sind typischerweise mit einem Durchmesser zwischen 0,1 mm und 0,4 mm, meist zwischen 0,2 mm und 0,25 mm ausgebildet. Eine typische Dichte der verpressten Metallfasern beträgt zwischen 30% und 60%, meist um ca. 40%. Bei diesen Maßen hat sich ein gutes elastischen Verhalten eingestellt. Die Fasermetalldichtung ist typischerweise dicht für Pulverpartikel mit einem Durchmesser zwischen 25 µm und 100 µm, nicht aber gasdicht.

Die Metallfasern bilden typischerweise (bereits vor dem Verpressen) ein Geflecht oder Gestrick aus, wodurch ein besonders guter Zusammenhalt der Fasern erreicht wird, so dass sich einzelne Fasern nicht lösen und nicht in das pulverförmige Material geraten können. Die Verpressung der Metallfasern erfolgt typischerweise in einem speziellen Werkzeug vorab, wobei der im voll verpressten Zustand für die Metallfasern verbleibende Raum typischerweise im Wesentlichen dem Raum am montierten Bauzylinder für die Fasermetalldichtung (bei Raumtemperatur) entspricht. Die Verpressung der Metallfasern bei der Fertigung der Fasermetalldichtung erfolgt typischerweise in axialer Richtung.

Beim Verpressen der Metallfasern (sowohl in der Fertigung der Fasermetalldichtung, als auch beim Einsetzen der Fasermetalldichtung in den Bauzylinder), und auch im Betrieb (beim Verfahren des Kolbens einschließlich der Fasermetalldichtung im Grundkörper) kommt es in der Regel zu keinen oder allenfalls sehr wenigen Faserbrüchen, da die Fasern aufgrund ihrer metallischen Eigenschaften nicht spröde sind.

Das metallische Material der Fasern ist grundsätzlich geeignet, auch bei höheren Temperaturen (≥ 500 °C) eingesetzt zu werden (anders etwa als Elastomere). Auch ein Aussetzen der Fasern in einem heißen Zustand an Luftsauerstoff kann durch geeignete Wahl des metallischen Faserwerkstoffs ermöglicht werden (anders als etwa Graphitfasern, die bei höheren Temperaturen abrauchen).

Gemäß der Erfindung ist weiterhin vorgesehen, dass das Substrat und die Dichtung zur Abdichtung des pulverförmigen Materials an einem oberen Teil des Kolbens ausgebildet sind, der lösbar an einem übrigen Teil des Kolbens angeordnet ist, insbesondere mit einem Klemmmechanismus und/oder einer Verdrehsicherung, und dass in dem übrigen Teil des Kolbens eine Heizeinrichtung ausgebildet ist, mit der das Substrat auf eine Einsatztemperatur ET aufgeheizt werden kann, wobei 500°C ≤ ET ≤ 1000°C. Durch die Ablösbarkeit des oberen Teils (Teilbarkeit des Kolbens) kann bei einem Wechsel des zu fertigenden Objekts der übrige Teil des Kolbens mit verschiedenen Bauzylinder-Anordnungen genutzt werden. Insbesondere ist nur eine Heizeinrichtung nötig.

Im Rahmen der Erfindung wird als Hochenergiestrahl typischerweise ein Laserstrahl eingesetzt; alternativ ist auch ein Elektronenstrahl (bei Betreib im Vakuum) möglich. Der Hochenergiestrahl reicht aus, um eine Schicht des pulverförmigen Materials aufzuschmelzen.

### Bevorzugte Ausführungsformen der Erfindung

Bei einer bevorzugten Ausführungsform der erfindungsgemäßen Bauzylinder-Anordnung ist vorgesehen, dass die miteinander verpressten Metallfasern ein Metallgestrick ausbilden. Durch die beim Stricken ausgebildeten Schlaufen wird ein besonders guter Zusammenhalt der Metallfasern erreicht. Insgesamt werden nur wenige einzelne Fasern eingesetzt; Faserenden entstehen im Wesentlichen nur durch Schneidprozesse. Entsprechend können sich kaum einzelne Fasern aus der Fasermetalldichtung lösen und ins pulverförmige Material gelangen und dieses verunreinigen. Somit ist eine besonders gute Qualität des gefertigten dreidimensionalen Objekts möglich.

Besonders bevorzugt ist eine Weiterbildung dieser Ausführungsform, bei der das Metallgestrick als ein umlaufend geschlossenes Strumpfgestrick ausgebildet ist. Das umlaufende Strumpfgestrick kann im Wesentlichen rotationssymmetrisch, entsprechend dem abzudichtenden Kolbenumfang, und ohne azimutale Enden ausgebildet werden, wodurch eine besonders gleichmäßige Dichtwirkung erreicht wird.

Eine bevorzugte Ausführungsform sieht vor, dass die Fasermetalldichtung durch das Einbringen in den Grundkörper bei Raumtemperatur bezüglich ihres Durchmessers um wenigstens 0,4 mm und/oder um wenigstens 0,8% elastisch gestaucht ist. Diese Stauchung reicht in der Regel gut aus, um durch Wärmeausdehnung bedingtes Spiel zwischen Kolben und Grundkörper auszugleichen und so auch bei höheren Temperaturen eine gute Dichtwirkung für das pulverförmige Material zu unterhalten.

Bei einer vorteilhaften Ausführungsform ist vorgesehen, dass die Fasermetalldichtung so ausgebildet ist, insbesondere bezüglich ihres Materials und/oder ihrer Dichte, dass sich eine Wärmeausdehnung des Innendurchmessers des Grundkörpers und eine Wärmeausdehnung des Außendurchmessers der Fasermetalldichtung zwischen Raumtemperatur RT und der Einsatztemperatur ET um maximal einen Faktor 2 unterscheiden, bevorzugt um maximal einen Faktor 1,5 unterscheiden, mit 500°C ≤ ET ≤ 1000°C. Durch die ähnlichen Wärmeausdehnungen bzw. Wärmeausdehnungskoeffizienten kann sichergestellt werden, dass die Pulverdichtung dem Grundkörper in ausreichendem Maße folgen kann, so dass die Dichtwirkung auch bei der Einsatztemperatur erhalten bleibt. Die Einsatztemperatur wird im Wesentlichen durch die gewünschte Temperatur des pulverförmigen Materials bestimmt.

Bevorzugt ist weiter eine Ausführungsform, bei der die Fasermetalldichtung in eine Nut an der Außenseite des Kolbens eingesetzt ist, wobei die Fasermetalldichtung die Nut radial überragt. Diese Geometrie hat sich für einen festen axialen Sitz der Fasermetalldichtung bewährt.

Eine bevorzugte Weiterbildung dieser Ausführungsform sieht vor, dass die Nut durch einen ersten Dichtungsträgerteil und einen zweiten Dichtungsträgerteil, der mit einer Bajonettmechanik gegenüber dem ersten Dichtungsträgerteil verdrehbar ist, ausgebildet wird. Beispielweise bildet eines der Dichtungsträgerteile eine "Schulter" aus, und eines der Dichtungsträgerteile einen "Deckel". Durch die zweiteilige Ausbildung kann eine starke (möglicherweise teilweise plastische) Verformung der Fasermetalldichtung beim Anbringen der Fasermetalldichtung am Kolben vermieden werden, und die Fasermetalldichtung kann eng in der Nut anliegen.

Bevorzugt ist auch eine Ausführungsform, bei der die Fasermetalldichtung aus einem Material gefertigt ist, das bei einer Einsatztemperatur ET beständig gegen Korrosion an Luftsauerstoff ist, mit 500°C ≤ ET ≤ 1000°C. Mit dieser Ausführungsform ist ein Wechsel des Bauzylinders (bzw. eines Teils davon) an einer Maschine zur schichtweisen Fertigung dreidimensionaler Objekte erleichtert bzw. beschleunigt möglich. Die Fasermetalldichtung kann im heißen Zustand Luftsauerstoff ausgesetzt werden, ohne dass diese beschädigt wird. Entsprechend braucht mit einem Wechsel des Bauzylinders (bzw. eines Teils davon) nicht abgewartet werden, bis dieser erkaltet ist, wenn beim Wechsel die Dichtung (typischerweise von der vom gefertigten Objekt abgewandten Seite) mit Luftsauerstoff in Berührung kommt.

Besonders bevorzugt ist eine Ausführungsform, bei der die Fasermetalldichtung aus einem Material gefertigt ist, bei dem eine Streckgrenze R_{p, 0,2}^{ET} bei einer Einsatztemperatur ET wenigstens 75% der Streckgrenze R_{p, 0,2}^{RT} bei Raumtemperatur RT beträgt, nachdem die Fasermetalldichtung über 100 Stunden bei der Einsatztemperatur ET gehalten wurde, mit 500°C ≤ ET ≤ 1000°C. Alternativ oder zusätzlich beträgt der Absolutwert der Streckgrenze R_{p, 0,2}^{ET} bei der Einsatztemperatur ET nach 100 Stunden wenigstens 100 MPa. Durch diese Materialwahl ist sichergestellt, dass die elastische Druckspannung, mit der die Fasermetalldichtung an den Grundkörper drückt, auch bei der Einsatztemperatur noch im Wesentlichen erhalten bleibt, und somit auch die Dichtigkeit gewährleistet bleibt.

Bei einer besonders bevorzugten Ausführungsform ist die Fasermetalldichtung aus einem Edelstahl, insbesondere Ni-haltigem Edelstahl, oder einer Ni-Legierung, insbesondere Hastalloy oder Inconel, besonders bevorzugt ausscheidungsgehärtetes Inconel 718, gefertigt. Diese Materialien sind aufgrund ihrer Eigenschaften, insbesondere hohen Korrosionsbeständigkeit und geringen Materialerweichung bei höherer Temperatur, besonders für die vorliegende Erfindung geeignet.

Bevorzugt ist eine Ausführungsform, die vorsieht, dass der übrige Teil einen mittleren Teil des Kolbens umfasst, in welchem die Heizeinrichtung zur Temperierung des Substrats vorgesehen ist, dass der übrige Teil weiterhin einen unteren Teil des Kolbens umfasst, in welchem eine Kühleinrichtung zur Kühlung des Kolbens vorgesehen ist, dass zwischen dem mittleren Teil und dem unteren Teil eine thermische Isolation vorgesehen ist, insbesondere eine Keramikplatte,
und dass der untere Teil des Kolbens eine umlaufende, an der Innenseite des Grundkörpers anliegende Dichtung zur Abdichtung von Gas ausgebildet ist, die ganz oder teilweise aus einem Elastomermaterial gefertigt ist. Bei dieser Bauform kann die Gasdichtigkeit des Kolbens gegenüber dem Grundkörper im Baubetrieb über die Dichtung zur Abdichtung von Gas ("Gasdichtung") am unteren Teil sichergestellt werden; aufgrund des dort verwendeten Elastomermaterials kann eine besonders hohe Dichtwirkung erzielt werden. Der Einsatz des temperaturempfindlichen Elastomermaterials ist möglich, weil mittels der thermischen Isolation zum mittleren Teil (der die Heizeinrichtung enthält) und der Kühleinrichtung im unteren Teil dort eine vergleichsweise geringe Temperatur eingerichtet werden kann, insbesondere sehr viel geringer als im Bereich der Dichtung zur Abdichtung des pulverförmigen Materials ("Pulverdichtung") im oberen Teil.

Bevorzugt ist bei einer Weiterbildung dieser Ausführungsform vorgesehen, dass die Dichtung zur Abdichtung von Gas als eine hydraulische oder pneumatische Dichtung ausgebildet ist, deren Außendurchmesser durch einen Druck von Hydraulikflüssigkeit oder Gas in der Dichtung einstellbar ist. Dadurch kann beim Aus- und/oder Einfahren des unteren Teils in den Grundkörper der Bauzylinder-Anordnung die Gasdichtung radial zusammengezogen werden, so dass diese das Verfahren des Kolbens nicht behindert und auch eine Gefahr von Beschädigungen der Gasdichtung verringert ist.

Vorteilhaft ist auch eine Ausführungsform, bei der der Grundkörper einen im Wesentlichen zylindermantelförmigen Isolationskörper umfasst, der zumindest die Innenseite des Grundkörpers ausbildet,
wobei der Isolationskörper aus einem Material mit einer spezifischen Wärmeleitfähigkeit λ_{IK} besteht, mit k_{IK} ≤ 3 W/(m*K), insbesondere wobei das Material des Isolationskörpers eine Keramik oder ein Glas, bevorzugt Quarzglas, besonders bevorzugt opakes Quarzglas, ist. Dies verringert eine Wärmeübertragung durch den Grundkörper, insbesondere so dass ein unterer Teil des Kolbens und insbesondere eine dortige Gasdichtung keinen oder nur einen geringen Wärmeeintrag über den Grundkörper erfährt.

In den Rahmen der vorliegenden Erfindung fällt auch eine Maschine zur schichtweisen Fertigung dreidimensionaler Objekte durch Lasersintern oder Laserschmelzen von pulverförmigem Material, umfassend
- eine Prozesskammer, an der eine Vorratszylinder-Anordnung für das pulverförmige Material und eine Bauzylinder-Anordnung mit einem Substrat zum Aufwachsen eines dreidimensionalen Objekts angeschlossen sind, und in welcher ein Schieber zum Aufbringen einer Schicht des pulverförmigen Materials aus der Vorratszylinder-Anordnung auf das Substrat der Bauzylinder-Anordnung angeordnet ist,
- einen Bearbeitungslaser zur Erzeugung eines Bearbeitungslaserstrahls oder eine Einkoppeleinrichtung für einen Bearbeitungslaserstrahl, und
- eine Scanneroptik zum Scannen des Bearbeitungslaserstrahls über das Substrat,
die dadurch gekennzeichnet ist, dass die Bauzylinder-Anordnung erfindungsgemäß wie oben beschrieben ausgebildet ist, und dass eine Austauschmechanik vorgesehen ist, mit der der Grundkörper zusammen mit dem Substrat einschließlich darauf gefertigtem dreidimensionalem Objekt und der Dichtung zur Abdichtung des pulverförmigen Materials gegen einen weiteren Grundkörper zusammen mit einem weiteren Substrat und einer weiteren Dichtung zur Abdichtung des pulverförmigen Materials für die Fertigung eines nächsten dreidimensionalen Objekts auf dem weiteren Substrat ausgetauscht werden kann. Mit dieser Maschine ist es möglich, dreidimensionale Objekte in schneller Folge zu fertigen. Durch den Austausch der Grundkörper samt Substrat, gefertigtem Objekt und Dichtung kann mit der Fertigung des neuen dreidimensionalen Objekts grundsätzlich begonnen werden, auch wenn das zuvor gefertigte dreidimensionale Objekt noch nicht abgekühlt ist. Durch den Grundkörper, das Substrat und die Dichtung und typischerweise einen oben abschließenden Deckel kann das Objekt zu einem gewissen Grad vor Luftsauerstoff geschützt werden, falls erforderlich. Die Dichtung zur Abdichtung des pulverförmigen Materials ist aus Metallfasern gefertigt, mit denen (im Gegensatz zu Graphitfasern) ein Kontakt mit Luftsauerstoff bei erhöhten Temperaturen nicht zu einer Beschädigung oder Zerstörung der der Dichtung führt.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Querschnittsansicht einer Ausführungsform einer erfindungsgemäßen Bauzylinder-Anordnung, montiert an einer Prozesskammer, während einer Laserschmelzbearbeitung eines zu fertigenden Objekts;
- Fig. 2: die Bauzylinder-Anordnung von Fig. 1 nach Fertigstellung des Objekts, beim Einfahren von Riegeln;
- Fig. 3: die Bauzylinder-Anordnung von Fig. 1, nach Auftrennen des Kolbens zwischen oberem Teil und übrigem Teil;
- Fig. 4: eine schematische Querschnittsdarstellung des Austauschs eines Teils der Bauzylinderanordnung von Fig. 1, nämlich des Grundkörpers mit Substrat und Pulverdichtung ("Baukammer") sowie gefertigtem Objekt, gegen eine neue, leere Baukammer;
- Fig. 5: die neue, leere Baukammer von Fig. 4, beim Ankoppeln des übrigen Teils des Kolbens;
- Fig. 6: eine schematische Schrägansicht einer Fasermetalldichtung für die Erfindung;
- Fig. 7a: eine schematische Querschnittsansicht eines Presswerkzeugs zur Fertigung einer Fasermetallsichtung für die Erfindung, im noch unverpressten Zustand;
- Fig. 7b: das Presswerkzeug von Fig. 7a, im verpressten Zustand;
- Fig. 8a: ein schematischer Querschnitt einer Fasermetalldichtung für die Erfindung, in einem zweiteiligen Dichtungsträger mit Bajonettmechanik, im geöffneten Zustand;
- Fig. 8b: die Fasermetalldichtung und der Dichtungsträger von Fig. 8a, im verschlossenen Zustand;
- Fig. 9: eine schematische Querschnittsdarstellung einer erfindungsgemäßen Maschine zur schichtweisen Fertigung dreidimensionaler Objekte.

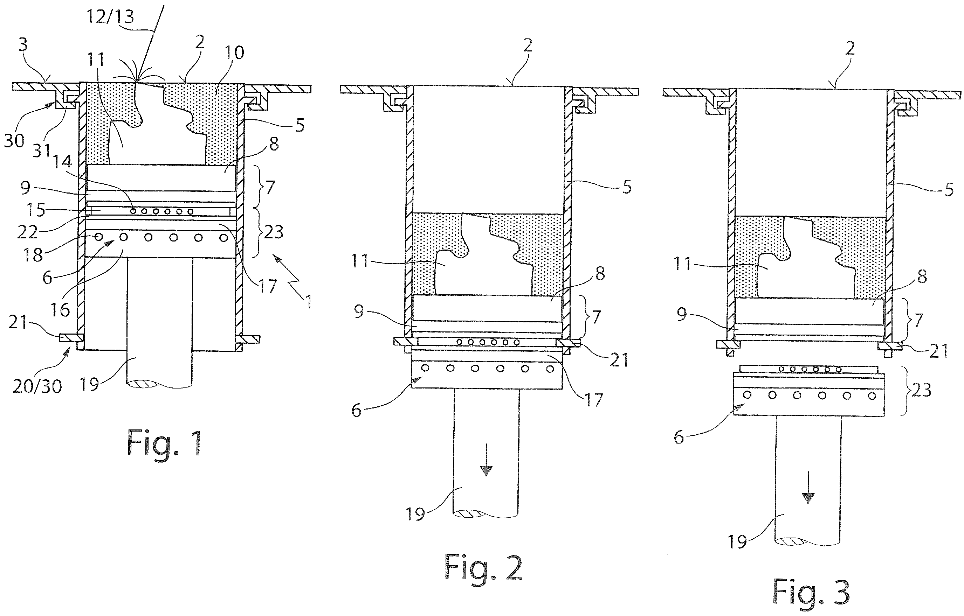

Die **Fig. 1** zeigt eine Ausführungsform einer erfindungsgemäßen Bauzylinder-Anordnung 1, die an eine Öffnung 2 im Boden 3 eine Prozesskammer angebaut ist. Die Bauzylinder-Anordnung 1 ist über Haken 31 an der Prozesskammer eingehängt (nur in Fig. 1 dargestellt); die Haken 31 sind Teil einer Austauschmechanik 30 für Baukammern (siehe unten).

Die Bauzylinder-Anordnung 1 umfasst einen Grundkörper 5, der hier zumindest innenseitig aus einem Quarzglas geringer Wärmeleitfähigkeit gefertigt ist und eine kreiszylindermantelförmige Gestalt hat. Weiterhin umfasst die Bauzylinder-Anordnung 1 einen Kolben 6, welcher in axialer Richtung (in Fig. 1 von oben nach unten) im Grundkörper 5 verfahrbar ist. Der Kolben 6 weist einen oberen Teil 7 auf, an welchem ein Substrat 8 ausgebildet ist.

Auf dem Substrat 8 wird ein dreidimensionales Objekt 11 schichtweise gefertigt, indem jeweils oberseitiges pulverförmiges Material 10 mit einem Hochenergiestrahl 12, hier einem Laserstrahl 13, abgetastet wird. Die Energie des Hochenergiestrahls 12 reicht aus, um eine oberste Schicht des pulverförmigen Materials 10 aufzuschmelzen. Das pulverförmige Material 10 ist typischerweise ein Metallpulver mit einer mittleren Korngröße zwischen 25 µm bis 100 µm, meist mit einem D50-Wert von 40-60 µm.

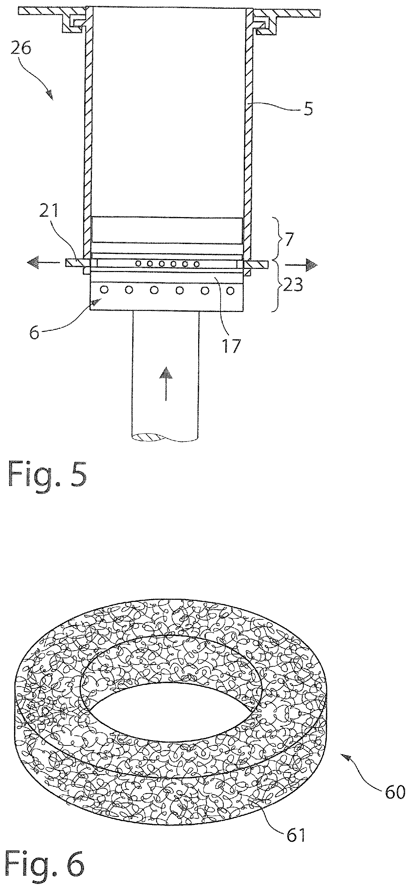

Der obere Teil 7 des Kolbens 6 ist mit einer Dichtung 9 zur Abdichtung des pulverförmigem Materials 10 versehen ("Pulverdichtung"), die als eine Fasermetalldichtung ausgebildet ist (vgl. hierzu Fig. 6ff). Die Pulverdichtung 9 liegt mit radialer Druckspannung an der Innenseite des Grundkörpers 5 an.

Der obere Teil 7 des Kolbens 6 liegt auf einem übrigen Teil 23 des Kolbens 6 auf; beide Teile 7, 23 sind mit einer nicht näher dargestellten Spannvorrichtung (die ebenfalls Teil der Austauschmechanik 30 ist) reversibel aneinander verspannt, so dass die beiden Teile 7, 23 leicht voneinander getrennt und aneinander befestigt werden können.

Im übrigen Teil 23 des Kolbens 6 ist eine Heizeinrichtung 14 (hier mit elektrischen Heizschleifen, nur in Fig. 1 dargestellt) ausgebildet, mit der das Substrat 8 von unten beheizt werden kann; typischerweise wird eine Einsatztemperatur des Substrats 8 und des pulverförmigen Materials 10 von zwischen 500°C und 1000°C eingestellt, bevorzugt zwischen 500 °C und 650 °C.

In der gezeigten Ausführungsform umfasst der übrige Teil 23 des Kolbens 6 einen mittleren Teil 15, in welchem die Heizeinrichtung 14 ausgebildet ist, und einen unteren Teil 16, an welchem eine Dichtung 17 zur Abdichtung von Gas angeordnet ist ("Gasdichtung"), ausgebildet. Die Gasdichtung 17 ist aus einem Elastomer gefertigt, beispielsweise aus Silikon, und kann mit Gasdruck eines Arbeitsgases aufgeblasen werden, um ihren Radius zu vergrößern und so eine engere Anlage an den Grundkörper 5 zu ermöglichen ("pneumatische Dichtung"). Im unteren Teil 16 ist weiterhin eine Kühlvorrichtung 18 (hier Kühlschlangen für ein Kühlwasser, nur in Fig. 1 dargestellt) vorgesehen, mit der der untere Teil 16, und insbesondere die Gasdichtung 17, auf einer moderaten Temperatur (meist um 100°C oder weniger) gehalten werden kann. Zwischen dem mittleren Teil 15 und dem unteren Teil 16 ist eine thermische Isolation 22, ausgebildet als eine Keramikplatte, angeordnet. Am unteren Teil 16 ist der Arm 19 einer Hubeinrichtung befestigt, mit dem der Kolben 6 axial verfahrbar ist.

Während der Fertigung des Objekts 11 ist in der Prozesskammer und im Grundkörper 5 um das Objekt 11 herum eine Schutzgasatmosphäre (etwa N2 oder ein Edelgas wie Argon) eingerichtet. Die Gasdichtung 17 verhindert ein Eindringen von Luftsauerstoff aus der Umgebung.

Am Grundkörper 5 ist zudem eine Riegelmechanik 20 ausgebildet, mit der Riegel 21 radial aus- und einfahrbar sind. Die Riegelmechanik 20 ist ebenfalls Teil der Austauschmechanik 30.

Nach der Fertigstellung des dreidimensionalen Objekts 11 wird der Kolben 6 nach unten verfahren, vgl. Fig. 2, bis die Unterseite des Substrats 8 bzw. des oberen Teils 7 gerade noch axial oberhalb der Riegel 21 liegt. Sodann werden die Riegel 21 radial nach innen eingefahren.

Die Gasdichtung 17 hat den Grundkörper 5 verlassen. Der Innenraum der Bauzylinder-Anordnung 1 ist dann noch durch die Pulverdichtung 9 geschützt, wobei nun geringe Mengen Luftsauerstoff an das Objekt 11 gelangen können. Da jedoch keine Schmelzprozesse mehr stattfinden, ist dieser geringe Sauerstoffeintrag in der Regel unkritisch. Falls gewünscht, kann noch eine Abdeckung auf die obere Öffnung 2 gelegt werden, um die darüber liegende Prozesskammer vor Sauerstoffeintrag zu schützen.

Nach einem Entkoppeln von oberem Teil 7 und übrigem Teil 23 und weiterem Absenken des Kolbens 6 wird dieser aufgetrennt. Der obere Teil 7 bleibt auf den Riegeln 21 liegen, vgl. **Fig. 3**, und der übrige Teil 23 des Kolbens 6 wird weiter zurückgefahren.

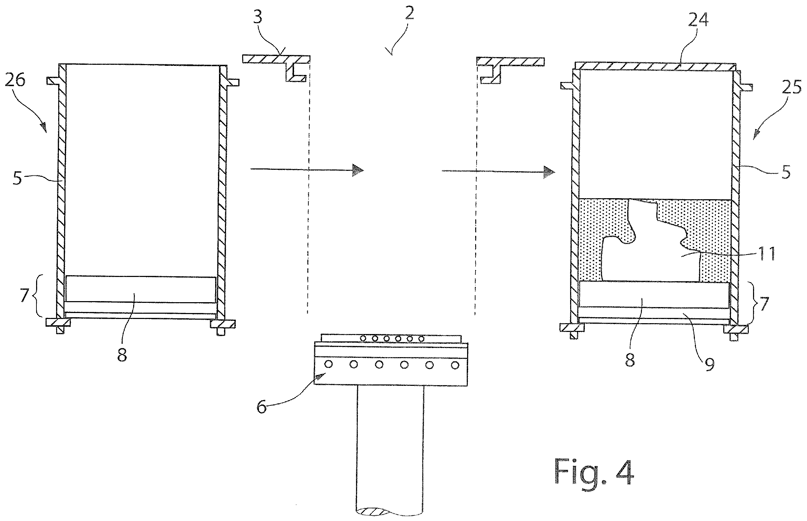

Nun kann die Baukammer 25, das ist der Grundkörper 5 zusammen mit dem Substrat 8 (einschließlich darauf angeordnetem gefertigtem Objekt 11) und der Pulverdichtung 9, hier verschlossen mit einer Abdeckung 24, von der Prozesskammer (vgl. deren Boden 3) entfernt werden, vgl. **Fig. 4**. Die Baukammer 25 und das Objekt 11 sind dabei noch heiß, insbesondere mehr als 500°C heiß. Durch die Pulverdichtung 9 und die Abdeckung 24 bleibt die im Inneren vorliegende Schutzgasatmosphäre weitgehend erhalten. Die Pulverdichtung 9 kann aufgrund des metallischen Materials ihrer Fasern den von unten angreifenden Luftsauerstoff aushalten. Die Abkühlung der Baukammer 25 und des gefertigten Objekts 11 kann dann abseits der Prozesskammer in einem Abkühllager erfolgen, typischerweise über mehrere Stunden.

Parallel dazu wird eine neue Baukammer 26, mit neuem Grundkörper 5 und neuem oberen Teil 7 des Kolbens 6, an der Öffnung 2 der Prozesskammer angeordnet.

Sodann fährt der Kolben 6 bzw. dessen übriger Teil 23 von unten an den oberen Teil 7 des Kolbens 6 der neuen Baukammer 26 heran, vgl. **Fig. 5**. Sobald ein Kontakt hergestellt ist, können die Riegel 21 radial nach außen zurückgefahren werden. Bei weiterem Anheben des Kolbens 6 fährt der untere Teil 23 in den neuen Grundkörper 5 ein; hierfür kann die Gasdichtung 17 kurzzeitig entspannt werden, um das Einfädeln der Gasdichtung 17 zu erleichtern.

Anschließend kann auf dem Substrat 8 der neuen Baukammer 26 mit dem schichtweisen Fertigen eines neuen dreidimensionalen Objekts begonnen werden. Eine Abkühlung des zuvor gefertigten dreidimensionalen Objekts 11 (vgl. Fig. 4) braucht nicht abgewartet zu werden.

Die **Fig. 6** zeigt in einer schematischen Schrägansicht eine Fasermetalldichtung 60, wie sie in einer erfindungsgemäßen Bauzylinder-Anordnung zum Einsatz kommt. Die Fasermetalldichtung 60 ist geschlossen ringförmig ausgebildet und besteht aus miteinander verpressten Metallfasern 61.

Typischerweise sind die Metallfasern bereits vor dem Verpressen ineinander verschlungen, typischerweise gewebt oder gestrickt, und/oder verdrillt und/oder aufgerollt (nicht näher dargestellt).

Zur Fertigung einer Fasermetalldichtung 60 für die Erfindung wird typischerweise wie folgt vorgegangen: In einem *Schritt* 1 erfolgt zunächst ein Rundstricken eines Metalldrahtschlauchs (auch genannt Strumpfgestrick), typischerweise mit einem Durchmesser von ca. 80 mm. In einem *Schritt* 2 wird der Schlauch auf eine benötigte axiale Länge zugeschnitten, soweit erforderlich. In einem *Schritt* 3 wird das erhaltene Schlauchstück abgeklopft, um durch den Schnitt verursachte lose Drahtstücke zu entfernen, soweit erforderlich. In einem *Schritt* 4 wird Schlauchstück zu einer Gestrickschnur verdrillt. Anschließend wird in einem *Schritt* 5 die Schnur in ein Pressgesenk (Presswerkzeug) spiralförmig eingelegt. Schließlich erfolgt in einem *Schritt 6* das Verpressen in eine Ringform.

Alternativ zu den Schritten 4 und 5 ist es auch möglich, den Metalldrahtschlauch bzw. das Schlauchstück direkt oder nach einem axialen Aufrollen in ein Pressgesenk einzusetzen, wobei das Schlauchstück wie ein Strumpf über einen Kern des Pressgesenks übergestülpt wird.

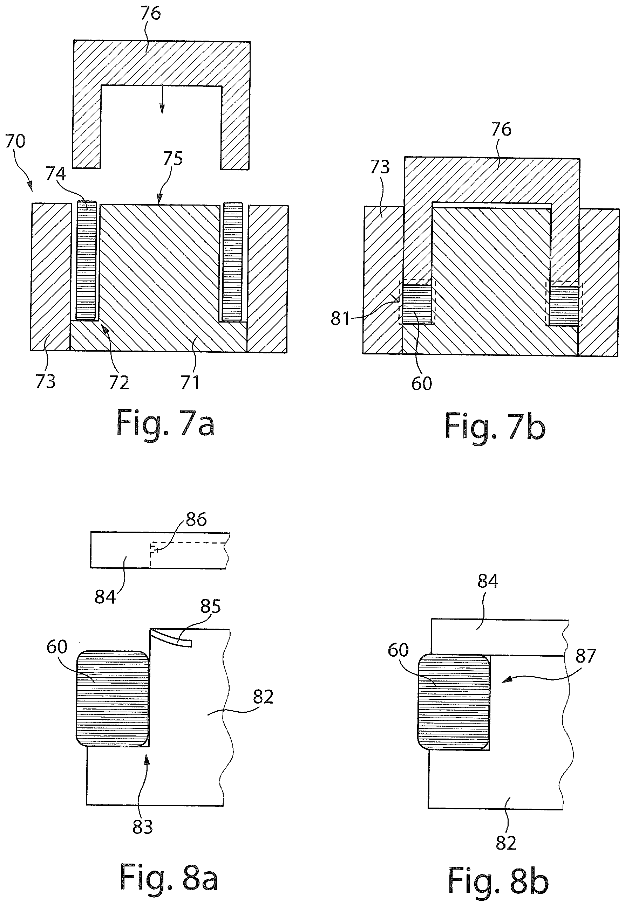

Die **Fig. 7a** zeigt in einem schematischen Querschnitt ein Pressgesenk 70, mit dem eine Fasermetalldichtung für die Erfindung gefertigt werden kann.

Das rotationssymmetrische Pressgesenk 70 umfasst ein Innenteil 71, das eine Schulter 72 aufweist, und ein im Wesentlichen rohrförmiges Außenteil 73. Im gezeigten Beispiel ist ein Metalldrahtschlauch 74 über den Kern 75 des Pressgesenks 70 gestülpt. Falls gewünscht, kann der Kern 75 nach oben hin auch konisch ausgebildet sein (nicht dargestellt), um ein Überstülpen des Metalldrahtschlauchs 74 zu erleichtern. Durch Absenken eines Pressstempels 76 wird der Metalldrahtschlauch 74 verpresst.

Dabei wird der Metalldrahtschlauch plastisch und auch elastisch verformt. Durch das Verpressen wird die Fasermetalldichtung 60 erhalten, vgl. **Fig. 7b**. Nach Entfernen des Presswerkzeugs kommt es zu einer Auffederung (elastischen Weitung) der Fasermetalldichtung 60, vgl. die gestrichelte eingezeichneten Konturlinien 81, wodurch der Außenradius, der Innenradius und die axiale Höhe der Dichtung 60 wieder zunehmen.

Dieser elastische Verformungsbereich ("elastisches Spiel") kann genutzt werden, um die Fasermetalldichtung 60 im montiertem Zustand in einer Bauzylinder-Anordnung einen elastischen Druck in radialer Richtung aufzuprägen. Dadurch liegt zum einen die Fasermetalldichtung eng an der Innenseite des Grundkörpers und der Außenseite des Kolbens an, zum anderen können unterschiedliche thermische Ausdehnungen von Kolben und Grundkörper in einem gewissen Umfang ausgeglichen werden.

Für die Montage einer Fasermetalldichtung 60 kann am Kolben, etwa am Substrat, ein erstes Dichtungsträgerteil 82 mit einer Schulter 83 sowie ein zweites, deckelartiges Dichtungsträgerteil 84 vorgesehen sein, vgl. **Fig. 8a**. Am ersten Dichtungsträgerteil 82 ist eine Führungsnut 85 für eine Führungsnase 86 am zweiten Dichtungsträgerteil 84 ausgebildet; Führungsnut 85 und Führungsnase 86 bilden eine Bajonettmechanik aus. Man beachte, dass typischerweise wenigstens zwei solche Führungsnuten 85 und Führungsnasen 86 vorgesehen sind, wobei zur Vereinfachung nur ein Satz in Fig. 8a dargestellt ist.

Bei abgenommenem zweiten Dichtungsträgerteil kann die Fasermetalldichtung ohne (oder allenfalls mit geringer) Verformung auf die Schulter 83 des ersten Dichtungsträgerteils 82 aufgesetzt werden.

Sodann kann das zweite Dichtungsträgerteil 84 mittels der Bajonettmechanik auf dem ersten Dichtungsträgerteil 82 aufgespannt (aufgedreht) werden, wodurch sich eine Nut 87 ausbildet, in der die Fasermetalldichtung 60 gehalten bzw. axial eingeklemmt ist, vgl. **Fig. 8b**. Man beachte, dass die Fasermetalldichtung 60 radial über die Nut 87 übersteht.

Das Drahtmaterial (Material der Metallfasern) der Fasermetalldichtung weist bevorzugt eine vergleichsweise geringe Wärmedehnung auf, typischerweise entsprechend dem Werkstoff des Grundkörpers (bzw. dessen Innenseite) der Bauzylinder-Anordnung. Dadurch kann die Vorspannung auch bei der Einsatztemperatur näherungsweise konstant gehalten werden. In der Regel weicht die Wärmedehnung des Drahtmaterials weniger als 20% von der Wärmedehnung des Werkstoffs des Grundkörpers ab. Das Drahtmaterial sollte weiterhin oberhalb 500 °C, und bevorzugt bis wenigstens 600 °C, oxidationsfest an Luftsauerstoff sein, damit bei Entnahme der Baukammer im heißen Zustand die Fasermetalldichtung nicht abraucht oder sonst beschädigt wird. Das Drahtmaterial sollte weiterhin so gewählt sein, dass dessen E-Modul bei Erwärmung auf die Einsatztemperatur nur geringfügig abfällt, bevorzugt weniger als 20% gegenüber Raumtemperatur über (wenigstens) 100 Stunden. Ebenso sollte die Streckgrenze (R_{p, 0,2}) bei Erwärmung nur geringfügig abfallen, bevorzugt weniger als 30% gegenüber Raumtemperatur über (wenigstens) 100 Stunden. Besonders bevorzugt als Drahtmaterialien, die auch die obigen Eigenschaften erfüllen können, sind Nickelbasislegierungen wie Inconel 718 oder Inconel X750 oder Nimonic 90.

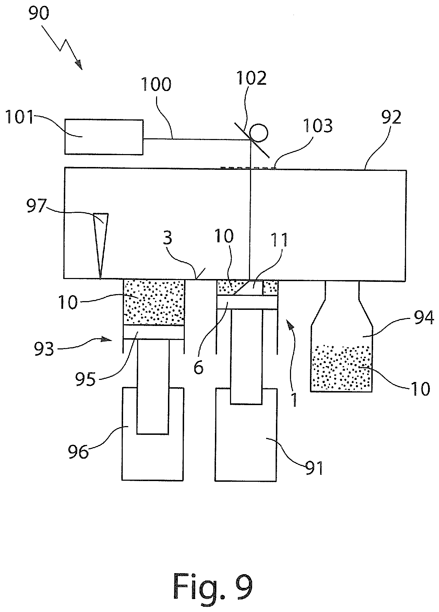

Die **Fig. 9** zeigt in einer schematischen Seitenansicht eine Ausführungsform einer erfindungsgemäßen Maschine 90 zur schichtweisen Fertigung eines dreidimensionalen Objekts 11 (oder auch mehrerer dreidimensionaler Objekte).

Die Maschine 90 umfasst eine gasdichte Prozesskammer 92, die in nicht näher dargestellter Weise mit einem Inertgas (Schutzgas), etwa Stickstoff oder einem Edelgas wie Argon, gefüllt und/oder gespült werden kann.

An die Prozesskammer 92 angeschlossen ist eine Vorratszylinder-Anordnung 93 für ein pulverförmiges Material 10 (gepunktet dargestellt), aus dem das dreidimensionale Objekt 11 durch Lasersintern oder Laserschmelzen gefertigt wird. Das pulverförmige Material 10 kann beispielsweise aus Metallpartikeln mit einer mittleren Korngröße (D50) von 25-100 µm bestehen. Durch schrittweises Hochfahren eines Pulver-Kolbens 95 mit einer Pulver-Hubeinrichtung 96 wird eine kleine Menge des pulverförmigen Materials 10 über das Niveau des Bodens 3 der Prozesskammer 92 angehoben, so dass mit einem motorisch betätigbaren Schieber 97 diese kleine Menge zu einer erfindungsgemäßen Bauzylinder-Anordnung 1 (etwa ausgebildet wie in Fig. 1 dargestellt) verbracht werden kann.

Die ebenfalls an die Prozesskammer 92 angeschlossene Bauzylinder-Anordnung 1 verfügt über den Kolben 6, auf dem oberseitig (auf dem Substrat, nicht näher dargestellt) das dreidimensionale Objekt 11 aufgebaut wird. Jeweils vor der Fertigung einer neuen Schicht des dreidimensionalen Objekts 11 wird der Kolben 6 mit einer Hubeinrichtung 91 um einen Schritt abgesenkt, und eine kleine Menge des pulverförmigen Materials 10 wird mit dem Schieber 97 in die Bauzylinder-Anordnung 1 gestrichen.

Sodann wird die neu aufgetragene Pulverschicht von oben mit einem Bearbeitungslaserstrahl 100 (hier aus einem lokalen Bearbeitungslaser 101 und durch ein Fenster 103 in die Prozesskammer 92 eindringend) an Stellen, die für eine lokale Verfestigung (Aufschmelzen, Aufsintern) des pulverförmigen Materials 10 vorgesehen sind, lokal beleuchtet und dadurch lokal stark erwärmt. Der Bearbeitungslaserstrahl 100 wird dabei durch eine Scanneroptik 102 (insbesondere enthaltend einen oder mehrere Spiegel, die insgesamt um wenigstens zwei Achsen verschwenkbar sind) über das Substrat geführt (gerastert).

Danach werden weitere Schichten gefertigt, bis das dreidimensionale Objekt 11 fertiggestellt ist. Überschüssiges pulverförmiges Material 10 kann mit dem Schieber 97 in einen Sammelbehälter 94 gestrichen werden.

Für eine schnelle Abfolge der Fertigung von dreidimensionalen Objekten kann die Bauzylinder-Anordnung 1 (bzw. deren Grundkörper einschließlich oberem Teil des Kolbens 6) getauscht werden, wie in Fig. 1 bis 5 beschrieben.

### Bezugszeichenliste

- 1: Bauzylinder-Anordnung
- 2: Öffnung (Prozesskammer)
- 3: Boden (Prozesskammer)
- 5: Grundkörper
- 6: Kolben
- 7: oberer Teil (Kolben)
- 8: Substrat
- 9: Dichtung zur Abdichtung des pulverförmigen Materials (Pulverdichtung)
- 10: pulverförmiges Material
- 11: dreidimensionales Objekt
- 12: Hochenergiestrahl
- 13: Laserstrahl
- 14: Heizeinrichtung
- 15: mittlerer Teil (Kolben)
- 16: unterer Teil (Kolben)
- 17: Dichtung zur Abdichtung von Gas (Gasdichtung)
- 18: Kühleinrichtung
- 19: Arm
- 20: Riegeleinrichtung
- 21: Riegel
- 22: thermische Isolation
- 23: übriger Teil (Kolben)
- 24: Abdeckung
- 25: Baukammer
- 26: neue Baukammer
- 30: Austauschmechanik
- 31: Haken
- 60: Fasermetalldichtung
- 61: Metallfaser
- 70: Pressgesenk (Presswerkzeug)
- 71: Innenteil
- 72: Schulter (Innenteil)
- 73: Außenteil
- 74: Metalldrahtschlauch (Strumpfgestrick)
- 75: Kern
- 76: Pressstempel
- 81: Konturlinien (Fasermetalldichtung nach Auffederung)
- 82: erstes Dichtungsträgerteil
- 83: Schulter (erstes Dichtungsträgerteil)
- 84: zweites Dichtungsträgerteil
- 85: Führungsnut (Bajonettmechanik)
- 86: Führungsnase (Bajonettmechanik)
- 87: Nut
- 90: Maschine
- 91: Hubeinrichtung
- 92: Prozesskammer
- 93: Vorratszylinder-Anordnung
- 94: Sammelbehälter
- 95: Pulver-Kolben
- 96: Pulver-Hubeinrichtung
- 97: Schieber
- 100: Bearbeitungslaserstrahl
- 101: Bearbeitungslaser
- 102: Scanneroptik (Laserscanner)
- 103: Fenster

## Patentansprüche

1. Bauzylinder-Anordnung (1) für eine Maschine (90) zur schichtweisen Fertigung dreidimensionaler Objekte (11) durch Sintern oder Schmelzen mit einem Hochenergiestrahl (12), insbesondere Laserstrahl (13), von pulverförmigem Material (10),
mit einem im Wesentlichen zylindermantelförmigen Grundkörper (5) und einem an einer Innenseite des Grundkörpers (5) entlang einer Zylinderachse des Grundkörpers (5) verfahrbaren Kolben (6),
wobei der Kolben (6) an seiner Oberseite ein Substrat (8) für das Aufwachsen eines dreidimensionalen Objekts (11) aufweist,
und wobei am Kolben (6) eine an der Innenseite des Grundkörpers (5) anliegende Dichtung (9) zur Abdichtung des pulverförmigen Materials (10) ausgebildet ist,
**dadurch gekennzeichnet,**
**dass** die Dichtung (9) zur Abdichtung des pulverförmigen Materials (10) als eine umlaufende Fasermetalldichtung (60) aus miteinander verpressten Metallfasern (61) ausgebildet ist,
**dass** die Fasermetalldichtung (60) durch Verpressen der Metallfasern (61) unter teilweise plastischer Verformung der Metallfasern (61) zu einem einheitlichen, als Ganzes handhabbaren Dichtkörper gefertigt ist, dass die verpressten Metallfasern (61) unter elastischer Druckspannung zwischen dem Kolben (6) und der Innenseite des Grundkörpers (5) angeordnet sind,
**dass** das Substrat (8) und die Dichtung (9) zur Abdichtung des pulverförmigen Materials (10) an einem oberen Teil (7) des Kolbens (6) ausgebildet sind, der lösbar an einem übrigen Teil (23) des Kolbens (6) angeordnet ist,
und **dass** in dem übrigen Teil (23) des Kolbens eine Heizeinrichtung (14) ausgebildet ist, mit der das Substrat (8) auf eine Einsatztemperatur ET aufgeheizt werden kann, wobei 500°C ≤ ET ≤ 1000°C.

2. Bauzylinder-Anordnung (1) nach Anspruch 1, **dadurch gekennzeichnet, dass** die miteinander verpressten Metallfasern (1) ein Metallgestrick ausbilden.

3. Bauzylinder-Anordnung (1) nach Anspruch 2, **dadurch gekennzeichnet, dass** das Metallgestrick als ein umlaufend geschlossenes Strumpfgestrick (74) ausgebildet ist.

4. Bauzylinder-Anordnung (1) nach einem der vorhergehenden Ansprüche, **dadurch gekennzeichnet, dass** die Fasermetalldichtung (60) durch das Einbringen in den Grundkörper (5) bei Raumtemperatur bezüglich ihres Durchmessers um wenigstens 0,4 mm und/oder um wenigstens 0,8% elastisch gestaucht ist.

5. Bauzylinder-Anordnung (1) nach einem der vorhergehenden Ansprüche, **dadurch gekennzeichnet, dass** die Fasermetalldichtung (60) so ausgebildet ist, insbesondere bezüglich ihres Materials und/oder ihrer Dichte, dass sich eine Wärmeausdehnung des Innendurchmessers des Grundkörpers (5) und eine Wärmeausdehnung des Außendurchmessers der Fasermetalldichtung (60) zwischen Raumtemperatur RT und der Einsatztemperatur ET um maximal einen Faktor 2 unterscheiden, bevorzugt um maximal einen Faktor 1,5 unterscheiden, mit 500°C ≤ ET ≤ 1000°C.

6. Bauzylinder-Anordnung (1) nach einem der vorhergehenden Ansprüche, **dadurch gekennzeichnet, dass** die Fasermetalldichtung (60) in eine Nut (87) an der Außenseite des Kolbens (6) eingesetzt ist, wobei die Fasermetalldichtung (60) die Nut (87) radial überragt.

7. Bauzylinder-Anordnung (1) nach Anspruch 6, **dadurch gekennzeichnet, dass** die Nut (87) durch einen ersten Dichtungsträgerteil (82) und einen zweiten Dichtungsträgerteil (84), der mit einer Bajonettmechanik gegenüber dem ersten Dichtungsträgerteil (82) verdrehbar ist, ausgebildet wird.

8. Bauzylinder-Anordnung (1) nach einem der vorhergehenden Ansprüche, **dadurch gekennzeichnet, dass** die Fasermetalldichtung (60) aus einem Material gefertigt ist, das bei einer Einsatztemperatur ET beständig gegen Korrosion an Luftsauerstoff ist, mit 500°C ≤ ET ≤ 1000°C.

9. Bauzylinder-Anordnung (1) nach einem der vorhergehenden Ansprüche, **dadurch gekennzeichnet, dass** die Fasermetalldichtung (60) aus einem Material gefertigt ist, bei dem eine Streckgrenze R_{p, 0,2}^{ET} bei einer Einsatztemperatur ET wenigstens 75% der Streckgrenze R_{p, 0,2}^{RT} bei Raumtemperatur RT beträgt, nachdem die Fasermetalldichtung über 100 Stunden bei der Einsatztemperatur ET gehalten wurde, mit 500°C ≤ ET ≤ 1000°C.

10. Bauzylinder-Anordnung (1) nach einem der vorhergehenden Ansprüche, **dadurch gekennzeichnet, dass** die Fasermetalldichtung (60) aus einem Edelstahl, insbesondere Ni-haltigem Edelstahl, oder einer Ni-Legierung, insbesondere Hastalloy oder Inconel, besonders bevorzugt ausscheidungsgehärtetes Inconel 718, gefertigt ist.

11. Bauzylinder-Anordnung (1) nach einem der vorhergehenden Ansprüche, **dadurch gekennzeichnet, dass** der obere Teil (7) des Kolbens (6) mit einem Klemmmechanismus und/oder einer Verdrehsicherung lösbar am übrigen Teil (23) des Kolbens (6) angeordnet ist.

12. Bauzylinder-Anordnung (1) nach einem der vorhergehenden Ansprüche, **dadurch gekennzeichnet, dass** der übrige Teil (23) einen mittleren Teil (15) des Kolbens (6) umfasst, in welchem die Heizeinrichtung (14) zur Temperierung des Substrats (8) vorgesehen ist, dass der übrige Teil (23) weiterhin einen unteren Teil (16) des Kolbens (6) umfasst, in welchem eine Kühleinrichtung (18) zur Kühlung des Kolbens (6) vorgesehen ist, dass zwischen dem mittleren Teil (15) und dem unteren Teil (16) eine thermische Isolation (22) vorgesehen ist, insbesondere eine Keramikplatte,
und dass der untere Teil (16) des Kolbens (6) eine umlaufende, an der Innenseite des Grundkörpers (5) anliegende Dichtung (17) zur Abdichtung von Gas ausgebildet ist, die ganz oder teilweise aus einem Elastomermaterial gefertigt ist.

13. Bauzylinder-Anordnung (1) nach Anspruch 12, **dadurch gekennzeichnet, dass** die Dichtung (17) zur Abdichtung von Gas als eine hydraulische oder pneumatische Dichtung ausgebildet ist, deren Außendurchmesser durch einen Druck von Hydraulikflüssigkeit oder Gas in der Dichtung (17) einstellbar ist.

14. Bauzylinder-Anordnung (1) nach einem der vorhergehenden Ansprüche, **dadurch gekennzeichnet, dass** der Grundkörper (5) einen im Wesentlichen zylindermantelförmigen Isolationskörper umfasst, der zumindest die Innenseite des Grundkörpers (5) ausbildet,
wobei der Isolationskörper aus einem Material mit einer spezifischen Wärmeleitfähigkeit λ_{IK} besteht, mit λ_{IK} ≤ 3 W/(m*K), insbesondere wobei das Material des Isolationskörpers eine Keramik oder ein Glas, bevorzugt Quarzglas, besonders bevorzugt opakes Quarzglas, ist.

15. Maschine (90) zur schichtweisen Fertigung dreidimensionaler Objekte (11) durch Lasersintern oder Laserschmelzen von pulverförmigem Material (10),
umfassend
- eine Prozesskammer (92), an der eine Vorratszylinder-Anordnung (93) für das pulverförmige Material (10) und eine Bauzylinder-Anordnung (1) mit einem Substrat (8) zum Aufwachsen eines dreidimensionalen Objekts (11) angeschlossen sind, und in welcher ein Schieber (97) zum Aufbringen einer Schicht des pulverförmigen Materials (10) aus der Vorratszylinder-Anordnung (93) auf das Substrat (8) der Bauzylinder-Anordnung (1) angeordnet ist,
- einen Bearbeitungslaser (101) zur Erzeugung eines Bearbeitungslaserstrahls (100) oder eine Einkoppeleinrichtung für einen Bearbeitungslaserstrahl (100), und
- eine Scanneroptik (102) zum Scannen des Bearbeitungslaserstrahls (100) über das Substrat (8),
**dadurch gekennzeichnet, dass** die Bauzylinder-Anordnung (1) nach einem der vorhergehenden Ansprüche ausgebildet ist, und dass eine Austauschmechanik (30) vorgesehen ist, mit der der Grundkörper (5) zusammen mit dem Substrat (8) einschließlich darauf gefertigtem dreidimensionalem Objekt (11) und der Dichtung (9) zur Abdichtung des pulverförmigen Materials (11) gegen einen weiteren Grundkörper (5) zusammen mit einem weiteren Substrat (8) und einer weiteren Dichtung (9) zur Abdichtung des pulverförmigen Materials (11) für die Fertigung eines nächsten dreidimensionalen Objekts (10) auf dem weiteren Substrat (8) ausgetauscht werden kann.

## Claims

1. Build cylinder arrangement (1) for a machine (90) for the layered production of three-dimensional objects (11) by sintering or melting with a high-energy beam (12), in particular laser beam (13), of powdered material (10), having a substantially cylinder-jacket-like base member (5) and a piston (6) which can be moved on an inner side of the base member (5) along a cylinder axis of the base member (5), wherein the piston (6) has at the upper side thereof a substrate (8) for growing a three-dimensional object (11), and wherein on the piston (6) a seal (9) which is in abutment with the inner side of the base member (5) is formed for sealing the powdered material (10),
**characterised in that**
the seal (9) for sealing the powdered material (10) is formed as a circumferential fibre metal seal (60) of metal fibres (61) which are pressed together,
the fibre metal seal (60) is produced by pressing the metal fibres (61) together thereby partially plastically deforming the metal fibres (61) to form a uniform sealing body that can be managed as a whole,
the pressed metal fibres (61) are arranged with resilient compression stress between the piston (6) and the inner side of the base member (5),
the substrate (8) and the seal (9) for sealing the powdered material (10) are constructed on an upper portion (7) of the piston (6), which is releasably arranged on a remaining portion (23) of the piston (6),
and **in that** there is constructed in the remaining portion (23) of the piston a heating device (14) by means of which the substrate (8) can be heated to an operating temperature ET, wherein 500°C ≤ ET ≤ 1000°C.

2. Build cylinder arrangement (1) according to claim 1, **characterised in that** the metal fibres (1) which are pressed together form a knitted metal fabric.

3. Build cylinder arrangement (1) according to claim 2, **characterised in that** the knitted metal fabric is constructed as a circumferentially closed knitted stocking (74).

4. Build cylinder arrangement (1) according to any one of the preceding claims, **characterised in that** the fibre metal seal (60) is resiliently compressed as a result of the introduction into the base member (5) at ambient temperature with respect to the diameter of the fiber metal seal (60) by at least 0.4 mm and/or at least 0.8%.

5. Build cylinder arrangement (1) according to any one of the preceding claims, **characterised in that** the fibre metal seal (60) is constructed in such a manner, in particular with regard to the material and/or the density thereof, that a thermal expansion of the inner diameter of the base member (5) and a thermal expansion of the outer diameter of the fibre metal seal (60) between ambient temperature RT and the operating temperature ET differ from each other by a maximum of a factor of 2, preferably differ by a maximum of a factor of 1.5, with 500°C ≤ ET ≤ 1000°C.

6. Build cylinder arrangement (1) according to any one of the preceding claims, **characterised in that** the fibre metal seal (60) is inserted into a groove (87) at the outer side of the piston (6), wherein the fibre metal seal (60) radially overhangs the groove (87).

7. Build cylinder arrangement (1) according to claim 6, **characterised in that** the groove (87) is constructed by a first seal carrier portion (82) and a second seal carrier portion (84) which can be rotated with a bayonet type mechanism with respect to the first seal carrier portion (82).

8. Build cylinder arrangement (1) according to any one of the preceding claims, **characterised in that** the fibre metal seal (60) is produced from a material which at an operating temperature ET is resistant to corrosion in atmospheric oxygen, with 500°C ≤ ET ≤ 1000°C.

9. Build cylinder arrangement (1) according to any one of the preceding claims, **characterised in that** the fibre metal seal (60) is produced from a material in which a yield strength R_{p, 0.2}^{ET} at an operating temperature ET is at least 75% of the yield strength R_{p, 0.2}^{RT} at ambient temperature RT after the fibre metal seal has been kept for 100 hours at the operating temperature ET, with 500°C ≤ ET ≤ 1000°C.

10. Build cylinder arrangement (1) according to any one of the preceding claims, **characterised in that** the fibre metal seal (60) is produced from a high-grade steel, in particular Ni-containing high-grade steel, or an Ni alloy, in particular Hastelloy or Inconel, particularly preferred precipitation-hardened Inconel 718.

11. Build cylinder arrangement (1) according to any one of the preceding claims, **characterised in that** the upper portion (7) of the piston (6) is releasably arranged on the remaining portion (23) of the piston (6) with a clamping mechanism and/or a torsion prevention means.

12. Build cylinder arrangement (1) according to any one of the preceding claims, **characterised in that** the remaining portion (23) comprises a central portion (15) of the piston (6) in which the heating device (14) for tempering the substrate (8) is provided, **in that** the remaining portion (23) further comprises a lower portion (16) of the piston (6) in which a cooling device (18) for cooling the piston (6) is provided, **in that** a thermal insulation (22) is provided between the central portion (15) and the lower portion (16), in particular a ceramic plate,
and **in that** the lower portion (16) of the piston (6) is constructed with a circumferential seal (17) which is in abutment with the inner side of the base member (5) for sealing gas and which is produced completely or partially from an elastomer material.

13. Build cylinder arrangement (1) according to claim 12, **characterised in that** the seal (17) for sealing gas is constructed as a hydraulic or pneumatic seal whose outer diameter can be adjusted by a pressure of hydraulic fluid or gas in the seal (17).

14. Build cylinder arrangement (1) according to any one of the preceding claims, **characterised in that** the base member (5) comprises an insulation member which is substantially in the form of a cylindrical jacket, and which forms at least the inner side of the base member (5), wherein the insulation member is made of a material with a specific thermal conductivity λ_{IK}, with λ_{IK} ≤ 3 W/(m*K), in particular wherein the material of the insulation member is a ceramic material or a glass, preferably quartz glass, particularly preferred opaque quartz glass.

15. Machine (90) for the layered production of three-dimensional objects (11) by means of laser sintering or laser melting of powdered material (10),
comprising
- a process chamber (92) to which a storage cylinder arrangement (93) for the powdered material (10) and a build cylinder arrangement (1) having a substrate (8) for growing a three-dimensional object (11) are connected, and in which a sliding member (97) for applying a layer of the powdered material (10) from the storage cylinder arrangement (93) to the substrate (8) of the build cylinder arrangement (1) is arranged,
- a processing laser (101) for producing a processing laser beam (100) or a coupling device for a processing laser beam (100), and
- an optical scanner unit (102) for scanning the processing laser beam (100) over the substrate (8),
**characterised in that**
the build cylinder arrangement (1) is constructed according to any one of the preceding claims, and **in that** there is provided an exchange mechanism (30) with which the base member (5) together with the substrate (8) including the three-dimensional object (11) produced thereon and the seal (9) for sealing the powdered material (11) can be replaced with an additional base member (5) together with an additional substrate (8) and an additional seal (9) for sealing the powdered material (11) for the production of a next three-dimensional object (10) on the additional substrate (8).

## Revendications

1. Ensemble de cylindres de construction (1) destiné à une machine (90) de production en couches d'objets tridimensionnels (11) par frittage ou fusion de matière en poudre (10) avec un faisceau à haute énergie (12), en particulier un faisceau laser (13),
ledit ensemble comprenant un corps de base (5) qui a sensiblement la forme d'une chemise de cylindre et un piston (6) qui peut être déplacé sur un côté intérieur du corps de base (5) le long d'un axe de cylindre du corps de base (5), le piston (6) comportant sur son côté supérieur un substrat (8) destiné à la croissance d'un objet tridimensionnel (11), et une garniture d'étanchéité (9), située sur le côté intérieur du corps de base (5), étant formée sur le piston (6) afin d'assurer l'étanchéité de la matière en poudre (10),
**caractérisé en ce que**
pour assurer l'étanchéité de la matière en poudre (10), la garniture d'étanchéité (9) est conçue comme une garniture d'étanchéité métallique fibreuse circonférentielle (60) comprenant des fibres métalliques (61) pressées les unes avec les autres,
la garniture d'étanchéité métallique fibreuse (60) est réalisée par pressage des fibres métalliques (61) avec déformation plastique partielle des fibres métalliques (61) afin d'obtenir un corps d'étanchéité uniforme qui peut être manipulé comme un tout,
les fibres métalliques pressées (61) sont disposées sous contrainte de pression élastique entre le piston (6) et le côté intérieur du corps de base (5),
pour assurer l'étanchéité de la matière en poudre (10), le substrat (8) et la garniture d'étanchéité (9) sont formés sur une partie supérieure (7) du piston (6) qui est disposée de manière amovible sur une partie restante (23) du piston (6),
et un dispositif de chauffage (14), qui permet de chauffer le substrat (8) à une température d'utilisation ET, avec 500 °C ≤ ET ≤ 1000 °C, est formé dans la partie restante (23) du piston.

2. Ensemble de cylindre de construction (1) selon la revendication 1, **caractérisé en ce que** les fibres métalliques (1) pressées les unes avec les autres forment un tricot métallique.

3. Ensemble de cylindre de construction (1) selon la revendication 2, **caractérisé en ce que** le tricot métallique est réalisé sous la forme d'un bas tricoté (74) fermé circonférentiellement.

4. Ensemble de cylindre de construction (1) selon l'une des revendications précédentes, **caractérisé en ce que** la garniture d'étanchéité métallique fibreuse (60) est comprimée élastiquement d'au moins 0,4 mm et/ou d'au moins 0,8 % en termes de diamètre par insertion dans le corps de base (5).

5. Ensemble de cylindre de construction (1) selon l'une des revendications précédentes, **caractérisé en ce que** la garniture d'étanchéité métallique fibreuse (60) est conçue, notamment en termes de matière et/ou de densité, de manière à ce que la dilatation thermique du diamètre intérieur du corps de base (5) et la dilatation thermique du diamètre extérieur de la garniture d'étanchéité métallique fibreuse (60) diffèrent entre la température ambiante RT et la température d'utilisation ET d'un facteur 2 maximum, de préférence d'un facteur 1,5 maximum, avec 500 °C ≤ ET ≤ 1000 °C.

6. Ensemble de cylindre de construction (1) selon l'une des revendications précédentes, **caractérisé en ce que** la garniture d'étanchéité métallique fibreuse (60) est insérée dans une rainure (87) ménagée sur le côté extérieur du piston (6), la garniture d'étanchéité métallique fibreuse (60) faisant saillie radialement de la rainure (87).

7. Ensemble de cylindre de construction (1) selon la revendication 6, **caractérisé en ce que** la rainure (87) est formée par une première partie de support de garniture d'étanchéité (82) et une deuxième partie de support de garniture d'étanchéité (84) qui peut être entraînée en rotation par rapport à la première partie de support de garniture d'étanchéité (82) au moyen d'un mécanisme à baïonnette.

8. Ensemble de cylindre de construction (1) selon l'une des revendications précédentes, **caractérisé en ce que** la garniture d'étanchéité métallique fibreuse (60) est réalisée à partir d'une matière résistant à la corrosion par l'oxygène de l'air à une température d'utilisation ET, avec 500 °C ≤ ET ≤ 1000 °C.

9. Ensemble de cylindre de construction (1) selon l'une des revendications précédentes, **caractérisé en ce que** la garniture d'étanchéité métallique fibreuse (60) est réalisée à partir d'une matière pour laquelle une limite d'élasticité RP_{p, 0,2}^{ET} à une température d'utilisation ET est d'au moins 75 % de la limite d'élasticité RP_{p, 0,2}^{ET} à température ambiante RT après maintien de la garniture d'étanchéité métallique fibreuse à la température d'utilisation ET pendant plus de 100 heures, avec 500 °C ≤ ET ≤ 1000 °C.

10. Ensemble de cylindre de construction (1) selon l'une des revendications précédentes, **caractérisé en ce que** la garniture d'étanchéité métallique fibreuse (60) est réalisée à partir d'un acier inoxydable, notamment d'un acier inoxydable contenant du Ni, ou d'un alliage de Ni, notamment d'Hastalloy ou d'Inconel, de manière particulièrement préférée d'Inconel 718 durci par précipitation.

11. Ensemble de cylindre de construction (1) selon l'une des revendications précédentes, **caractérisé en ce que** la partie supérieure (7) du piston (6) est disposée sur la partie restante (23) du piston (6) de manière amovible au moyen d'un mécanisme de serrage et/ou d'un dispositif anti-rotation.

12. Ensemble de cylindre de construction (1) selon l'une des revendications précédentes, **caractérisé en ce que** la partie restante (23) comprend une partie médiane (15) du piston (6) dans laquelle le dispositif de chauffage (14) est prévu pour réguler la température du substrat (8), **en ce que** la partie restante (23) comprend en outre une partie inférieure (16) du piston (6) dans laquelle un dispositif de refroidissement (18) est prévu pour refroidir le piston (6), **en ce qu'**une isolation thermique (22), en particulier une plaque en céramique, est prévue entre la partie médiane (15) et la partie inférieure (16), et **en ce que** la partie inférieure (16) du piston (6) est formée avec une garniture d'étanchéité périphérique (17) qui est située sur le côté intérieur du corps de base (5) pour assurer l'étanchéité aux gaz et qui est réalisée entièrement ou partiellement à partir d'une matière élastomère.

13. Ensemble de cylindre de construction (1) selon la revendication 12, **caractérisé en ce que**, pour assurer l'étanchéité aux gaz, la garniture d'étanchéité (17) est réalisée sous la forme d'une garniture d'étanchéité hydraulique ou pneumatique dont le diamètre extérieur peut être réglé par une pression de fluide hydraulique ou de gaz dans la garniture d'étanchéité (17).

14. Ensemble de cylindre de construction (1) selon l'une des revendications précédentes, **caractérisé en ce que** le corps de base (5) comprend un corps isolant sensiblement en forme de chemise de cylindre qui forme au moins le côté intérieur du corps de base (5), le corps isolant comprenant une matière ayant une conductivité thermique spécifique λ_{IK}, avec λ_{IK} ≤ 3 W/ (m*K), en particulier la matière du corps isolant étant une céramique ou un verre, de préférence du verre de quartz, de manière particulièrement préférée du verre de quartz opaque.

15. Machine (90) destinée à la production en couches d'objets tridimensionnels (11) par frittage laser ou fusion laser de matière en poudre (10), ladite machine comprenant
- une chambre de traitement (92) à laquelle sont raccordés un ensemble de cylindre d'alimentation (93) destiné à la matière en poudre (10) et un ensemble de cylindre de construction (1) pourvu d'un substrat (8) destiné à la croissance d'un objet tridimensionnel (11), et dans laquelle est disposée une coulisse (97) destinée à appliquer une couche de matière en poudre (10) depuis l'ensemble de cylindre d'alimentation (93) jusque sur le substrat (8) de l'ensemble de cylindre de construction (1),
- un laser de traitement (101) destiné à générer un faisceau laser de traitement (100) ou un dispositif d'injection par couplage d'un faisceau laser de traitement (100), et
- une optique de scanner (102) destinée à balayer le faisceau laser de traitement (100) sur le substrat (8), **caractérisée en ce que**
l'ensemble de cylindre de construction (1) est conçu selon l'une des revendications précédentes, et **en ce qu'**un mécanisme d'échange (30) est prévu qui permet d'échanger le corps de base (5) avec le substrat (8), incluant l'objet tridimensionnel (11) produit dessus et la garniture d'étanchéité (9) destinée à assurer l'étanchéité de la matière en poudre (11), contre un autre corps de base (5) conjointement avec un autre substrat (8) et une autre garniture d'étanchéité (9) destinée à assurer l'étanchéité de la matière en poudre (11) afin de produire un objet tridimensionnel suivant (10) sur l'autre substrat (8).
